# EUROPEAN PATENT APPLICATION

(11) **EP 3 385 748 A1**
(43) Date of publication of application: **10.10.2018**
(21) Application number: 17164695.3
(22) Date of filing: 04.04.2017
(51) Int. Cl.: G01S 13/34, G01S 13/42, G01S 13/88

(54) **MONITORING SYSTEM USING MICROWAVES**

(71) Applicant: ABB Schweiz AG, 5400 Baden (CH)
(72) Inventor: Zlatanski, Martin, 8700 Küssnacht (CH); Sommer, Philipp, 8003 Zürich (CH); Madonna, Gian-Luigi, 8112 Otelfingen (ZH) (CH); Zurfluh, Franz, 5200 Brugg (CH); Angelosante, Daniele, 5300 Turgi (CH)
(74) Representative: ABB Patent Attorneys

(57) **Abstract**

A method (200) of monitoring at least one target (30) with a microwave motion detection system (1) is provided, which comprises: transmitting (210) microwave signals into an area (25) to be monitored; receiving (220) microwave signals reflected by a target (30); determining (230) location, speed, and estimated trajectory of the target (30) from the received microwave signals; determining (240) if the target (30) belongs to a static background or dynamic background; setting (250) an alarm condition, if the target (30) is determined not to belong to a static background or dynamic background and if it is determined that the target fulfils at least one condition of approaching to a protected item (50), based on the determined location, speed, and estimated trajectory (ET) of the target. Further, a respective microwave motion detection system (1) is provided.

## Description

### FIELD OF THE INVENTION

This disclosure generally relates to a monitoring system employing microwaves, also known as a radar system, and more particularly relates to a system that serves to detect and to classify targets, which occur in an area and might approach a protected item, for example a machine or electrical installation, within that area.

### TECHNICAL BACKGROUND

In the field of machine safety for single machines or entire production lines, optical safety devices such as laser scanners are a standard and well-accepted solution for protecting hazardous areas without physical obstruction. However, optical sensor systems show limitations when used in environments, which have, or may at times exhibit, properties that can weaken, obscure or block the optical signals, e.g. by a presence of dust, smoke, and/or humidity, or when they are exposed to direct sun light.

Another major limitation of conventional laser scanners is their poor robustness against vibration and mechanical shocks, which are often present in industrial environments. In a laser scanner, the optical beam is swept by a rotating mirror, which can easily be detuned, if the device is subjected to even moderate levels of mechanical stress. This can be a major limitation with respect to required reliability of detection, in particular in areas bearing significant hazards for personnel and/or inventory.

In view of the above and for other reasons, there is a need for the present invention.

### SUMMARY

In light of the above, a method of monitoring at least one target with a microwave motion detection system according to claim 1, and a microwave motion detection system according to claim 11 are provided. Further aspects, advantages, and features are apparent from the dependent claims, claim combinations, the description, and the accompanying drawings.

According to a first aspect, a method of monitoring at least one target with a microwave motion detection system is provided. The method comprises transmitting microwave signals into an area to be monitored; receiving microwave signals reflected by a target; determining location, speed, and estimated trajectory of the target from the received microwave signals; determining if the target belongs to a static background or dynamic background; setting an alarm condition, if the target is determined not to belong to a static background or dynamic background, and if it is determined that the target fulfils at least one condition of approaching to a protected item, based on the determined location, speed, and estimated trajectory of movement of the target.

According to a further aspect, a microwave motion detection system, in particular microwave motion detection device, is provided. It comprises a transmitter and at least one antenna for transmitting a microwave signal into an area to be monitored; at least two antennas for receiving the microwave signals reflected by a target; and a processing unit; wherein the system is configured for: determining location, speed, and estimating the trajectory of the target from received microwave signals; determining, if the target belongs to a static background or dynamic background; setting an alarm condition, if the target is determined not to belong to a static background or dynamic background, and if it is determined that the target fulfils at least one condition of approaching to a protected item, based on the determined location, speed, and estimated trajectory of movement of the target.

### BRIEF DESCRIPTION OF THE DRAWINGS

Some of the above indicated and other more detailed aspects of embodiments will be described in the following description and partially illustrated with reference to the figures.
- Fig. 1: shows a schematic view of a microwave motion detection system according to embodiments described herein;
- Fig. 2A: shows a schematic view of a microwave motion detection system employed according to a method according to embodiments described herein;
- Fig. 2B: shows a top view on the microwave motion detection system employed according to a method according to embodiments described herein as in Fig. 2A;
- Fig. 3: shows a schematic view of a part of the working principle of a microwave motion detection system according to embodiments;
- Fig. 4: shows a schematic view of a part of the working principle of a microwave motion detection system according to embodiments;
- Fig. 5: shows a schematic view of a microwave motion detection system employed in a method according to further embodiments described herein;
- Fig. 6: shows a schematic view of a microwave motion detection system employed in a method according to yet further embodiments described herein;
- Fig. 7: shows a schematic view of a microwave motion detection system employed in a method according to yet further embodiments described herein;
- Fig. 8: shows a diagram of a method according to embodiments.

### DETAILED DESCRIPTION OF EMBODIMENTS

Reference will now be made in detail to the various embodiments, one or more examples of which are illustrated in the figures. Within the following description of the drawings, the same reference numbers refer to same components. Generally, only the differences with respect to individual embodiments are described. Each example is provided by way of explanation and is not meant as a limitation. Further, features illustrated or described as part of one embodiment can be used on or in conjunction with other embodiments to yield yet a further embodiment. It is intended that the description includes such modifications and variations.

As used herein, the term "target", or "target object", or "object" is intended to mean any physical object which can be detected by the microwave motion detection system according to embodiments, due to producing a radar echo when being in the field of view of the system. Non-limiting examples for targets in the context of the present disclosure are technical objects such as a (small) wagon, a robot, a box, or living beings like a human, or an animal. Further, also static objects are regarded as targets, such as walls, poles, boxes, closets, shelves, and the like. Herein also, microwave motion detection system means or includes microwave motion detection device.

As used herein, the term "area" is intended to mean a geographical region being used in conjunction with the monitoring process by the microwave detection system. In particular, area is a limited geographical space or region into which the microwaves are transmitted by the microwave motion detection system in order to detect an object present in the area. In the broadest interpretation as used herein, the area is substantially identical with the field-of-view of the microwave detection system. In embodiments, the area may also be limited or defined in the processing unit of the microwave motion detection system to be smaller than the field-of-view.

As used herein, the term "field-of-view" is intended to mean an area in which targets can be identified by the microwave motion detection system according to embodiments, wherein the field of view is mainly limited by the technical characteristics of the system.

As used herein, the terms "speed" or similarly "velocity" are intended to mean the speed of an object in the area to be monitored, wherein the term typically includes that the speed is expressed as a vector typically having three dimensions, so that the parameter speed is not limited to express a scalar value (unless explicitly stated herein), but also carries a direction information and components of the movement in different dimensions.

Generally, in embodiments, a microwave motion detection system (i.e. microwave motion detection device) for monitoring an area in the vicinity of a potentially dangerous installation or apparatuses is proposed, such as an industrial machine like (in non-limiting examples) a press, a robot, or electrical installations carrying voltages and/or currents dangerous to humans, in particular voltages of 100 Volt or more, more particularly of 1 kV or more. The system may also be employed for monitoring areas in which sensitive processes are carried out, so that the presence of a human or an animal might lead, e.g., to damage of processed goods. Embodiments also pertain to the applied methods for monitoring at least one target with a microwave motion detection system according to embodiments described herein. Thus, as used herein, "protected item" is intended to mean a machine or installation, wherein "protection" may mean that the machine or process run thereon may be protected against intrusion or contact with a human or a movable object, or "protection" may mean that an individual, or a technical movable object, is protected from potential dangers or damage it might suffer when coming too close to the machine or installation. Both variants are meant to be included when "protected item" is used herein for a machine or installation.

Generally, the method and device according to embodiments are based on the Frequency-Modulated Continuous Wave (FMCW) radar principle, in order to estimate a distance from a detected target to a sensor of the system, and the relative velocity of the target with respect to the sensor. As a sensor, the system can in embodiments use an array of receiving antennas, for example a uniform linear array, to compute the direction-of-arrival (the position in azimuth) of the target. The information from the receiving antennas is processed in a processing unit. The transmitter generates a frequency-modulated signal, which is radiated by a transmitting antenna into the area to be monitored. Targets situated within the area are illuminated by the transmitted beam and reflect the signal, and their respective reflections will reach the receiving antennas plane. The plane wave corresponding to each reflection will reach the different receiving antennas at slightly different moments depending on the incident angle. Therefore, the phases of the waves reaching the different receiving antennas are different between each other. Measuring these phase differences by analysing the down-converted signals allows to estimate the direction-of-arrival of the plane waves and thus the azimuth position of the targets. For each target, the range and the relative velocity with respect to the device position are estimated using the FMCW principle. By combining the direction-of-arrival and range information, the azimuth position of each target can be computed. All the computations based on the down-converted received signals are carried out in the processing unit of the microwave motion detection system.

Based on the distance, the speed, and estimated trajectory of the target as parameters, the system decides whether a trigger signal (and/or similarly: alarm signal) shall be issued by taking into account a set of conditions, which may also be called rules. The condition, or more typically set of conditions, under which a trigger signal is issued, is also called alarm condition. A target detected by the microwave motion detection system is estimated and/or predicted to approach the protected item, when it fulfils at least one set of conditions. The protected item may be, as non-limiting examples, a machine or another type of installation. A detected approaching to the protected item then causes a trigger signal to be issued. The at least one set of conditions is stored in the processing unit. It may be pre-defined by the manufacturer of the system, and/or may be configured by an operator of the microwave motion detection system during a setup phase, and/or may also be later adapted by an operator. This may be done to improve detection accuracy or to account for changes in the scenario, e.g. the occurrence of a new type of movable targets to be detected, such as, e.g., automated guided vehicles. According to embodiments, the at least one set of conditions generally comprises at least the speed, the location and an estimated trajectory of the target. Thereby, the estimated trajectory is calculated by a prediction unit in the processing unit, mainly by taking into account the trajectory of the target in a past time span (history of movement). Further, as is laid out further below, the prediction unit may in embodiments also take into account a type or classification of the target derived from the microwave signal. For example, from the properties of the radar echo, it may be derived by the processing unit that a specific target is an automated guided vehicle, which is stored to always follow a path which leads safely around the protected item, which will exclude that a trigger signal and/or alarm signal is issued.

The protected item typically, but not necessarily, is located at substantially the same location as the sensor - more precisely, as the receiving antennas, as will be laid out further below - of the microwave motion detection system. Other cases are laid out further below. The trigger signal might, exemplarily, lead to the modification of the machine's operation, e.g. a speed reduction, or to a complete stop. Also, security personnel may be informed via a network, in particular data network or (industrial) internet of things (IoT), or mobile phone connection.

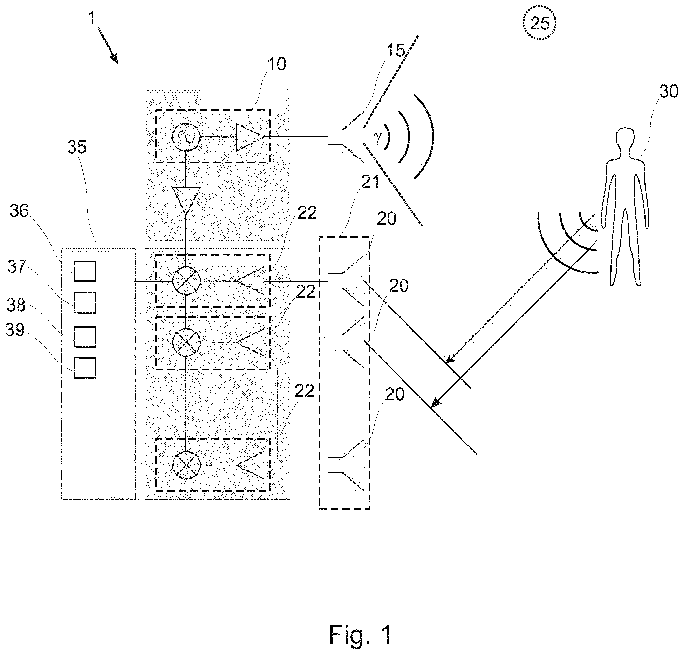

Fig. 1 shows a microwave motion detection system 1 according to embodiments. A transmitter 10 is coupled to an antenna 15, which transmits a microwave signal into an area 25 which shall be monitored, which may in the example shown in Fig. 1 be the field-of-view of the microwave motion detection system 1. A target 30, which is as a non-limiting example depicted as a human, reflects the microwave signals. At least two antennas 20, which are typically, but not necessarily arranged in a one-dimensional (straight) linear array, receive the microwave signals reflected by the target 30. The signals received by the antennas 20 are each amplified and downconverted in the respective receiving section 22 per antenna 20. To this end, typically each receiving section 22 contains a frequency downconverting unit per receiving antenna 20, for example a microwave mixer, which allows to input/feed the processing unit 35 with signals of significantly lower frequency than the microwave signals coming from the antennas 20. The downconverted frequency is typically situated in the kHz to MHz range. For example, the downconverted frequency may be in the range from 1 kHz to 100 MHz, more typically from 10 kHz to 10 MHz. The processed, i.e. downconverted and amplified signals from the antennas 20 are then input into the processing unit 35. The processing unit 35 includes, inter alia, a memory unit 36 and a prediction unit 37 (all components are shown only symbolically for illustrational purposes). The processing unit typically further includes analog-to-digital-converters (A/D-converters) at its input stage 38, and digital signal processing hardware 39 for further processing of the digital data coming from the A/D-converters. The digital signal processing hardware 39 may comprise at least one of a microcontroller, a field programmable gate array (FPGA), a digital signal processor (DSP), and a microcomputer. Typically, the processing unit 35 may be realized as, or comprise a, single board computer (SBC). The prediction unit 37 may be an integral part of the digital signal processing hardware 39. The skilled person readily understands that the processing unit 35 may be construed in significantly varying ways than herein described, while still fulfilling the functions or similar functions as herein described.

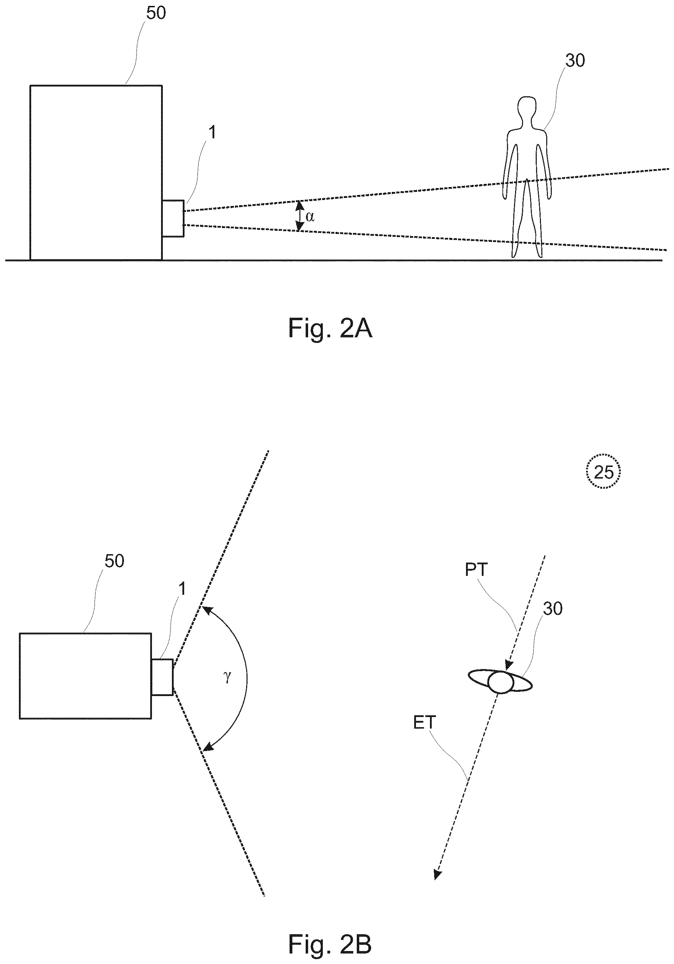

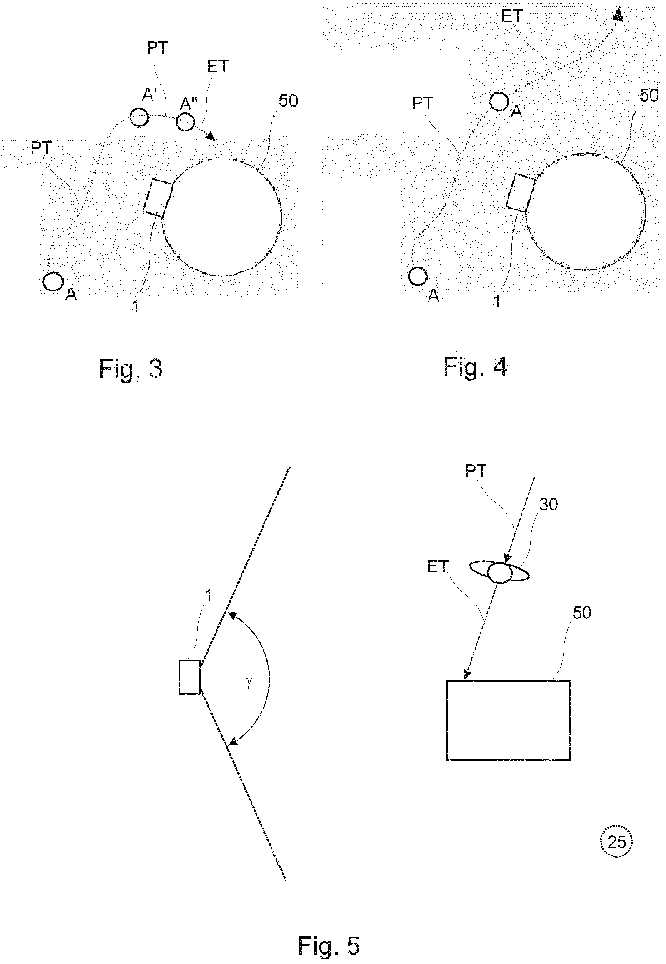

In a non-limiting exemplary implementation according to embodiments, the transmitting antenna 15 and the at least two receiving antennas 20 are horn antennas. They may also be of other types, such as patch antennas. The frequency of the signal which is transmitted into the area 25 to be monitored may be from 10 GHz to 150 GHz, more typically from 20 GHz to 100 GHz, e.g. 26 GHz or 80 GHz. The bandwidth employed according to the FCMW principle may typically be from 5% to 25% of the central frequency, more typically from 10% to 20%. For the dedicated purpose of the surveillance and protection of sensitive machinery and installations, a certain characteristics of the antenna beam shape may be chosen. The beam has a relatively wide range of azimuth angles γ (see Fig. 1; in particular the azimuth angles and elevation angles being defined relative to a plane or central plane or symmetry plane in the field of view), e.g. the beam has azimuth angles γ in a range of ±45° up to a range of ±90°, more preferably in a range of ±60° up to a range of ±75°, in particular in a range of ±72°. The boundary elevation angle α (see e.g. Fig. 2 and Fig. 3) is preferably narrow in comparison to the boundary azimuth angle γ, e.g. elevation angles α being selected to be in a range of at least ±2° and at most ±8°, more preferably being in a range of at least ±4° and at most ±7 °, in particular being in a range of ±5°. In embodiments, the azimuth angle γ is at least 5 times larger than the elevation angle α, more typically 10 times or more larger. This increases the observation area and allows the antennas 15, 20 to be placed closer to the ground, while the amount of clutter (noise) received by the microwave motion detection system 1 is reduced. The clutter increases the background noise and decreases the signal-to-noise ratio. Typically, the microwave motion detection system according to embodiments has a range resolution of 5 cm or better, more typically of 2 cm or better.

The transmitter 10 generates a frequency-modulated signal, which is radiated by the transmitting antenna 15 into the area 25 to be monitored. The target 30, in the example of Fig. 1 a human situated within the area 25 to be monitored, is illuminated by the transmitted microwave signal. The target 30 reflects the signal, and the respective reflection reaches the receiving antennas 20. The plane wave corresponding to each reflection will reach the different receiving antennas 20 at slightly different moments depending on the incident angle, as is illustrated by arrows in Fig. 1. Therefore, the phases of the waves reaching the different receiving antennas 20 are not the same. Measuring these phase differences by analysing the down-converted signals from the receiving sections 22 allows to estimate the direction-of-arrival of the plane waves and thus the azimuth position of the target(s) 30. For each target, the range and the relative velocity with respect to the position of the antenna array 21 are estimated using the FMCW principle. The microwave motion detection system 1 of Fig. 1 may be mounted or attached to an installation, the protected item 50, which is, e.g. shown in Fig. 2A.

In Fig. 2A, an exemplary setup of the microwave motion detection system 1 according to embodiments is shown. Therein, the microwave motion detection system 1 is mounted at a protected item 50, e.g. a machine 51 or other installation. A microwave signal is transmitted into the area to be monitored with an elevation angle α.

A method 200 of monitoring, according to embodiments, at least one target 30 with the microwave motion detection system 1 can be summarized as follows. Microwave signals are transmitted into an area 25 to be monitored. Microwave signals reflected by at least one target 30 are then detected, downconverted and subsequently processed in the processing unit 35. Location in real time, speed in real time, and trajectory data for a past defined time span (past trajectory, PT) are then calculated for the target 30 by the processing unit 35. The system 1 is configured to be able to discriminate, in the processing unit 35, between different targets 30 and to handle each target separately from one another, which is laid out further below.

In the above process, the processing unit 35 determines location, speed, and a past trajectory PT of the target 30 from the received microwave signals. Further, the processing unit 35 estimates a predicted and/or estimated trajectory ET for the target 30 from the known information about its movement in a past defined time span, while in embodiments optionally also taking into account classification information about the target (human, self-moving car, etc.). Thus, the microwave monitoring system according to embodiments computes both the trajectories PT of targets 30 for a past time span and also estimates (predicts) a movement of the target, thus its estimated trajectory ET, for the immediate near future. The trajectory information is obtained by analyzing the position history information of each target. These calculations are typically carried out in a prediction unit 37 of the processing unit 35.

Fig. 2B shows a top view on the scenario of Fig. 2A, illustrating azimuth angle γ while additionally showing the calculated past trajectory PT and estimated trajectory ET of a target 30 being exemplarily a human.

In Fig. 3, a top view on a setup similar to that in Fig. 2B is shown. The protected item 50, e.g. a machine, having the microwave motion detection system 1 attributed to, in particular attached or mounted thereto, is approached by a target A. For instance, a target A which follows the trajectory shown in Fig. 3 will then trigger an alarm, as from the point in time where the target has position A', the trajectory is directed in a direction towards the protected item 50, e.g. a machine 51 or installation. For example, at position A", the estimated trajectory ET is directed towards the protected item 50, hence the processing unit 35 may determine that the set of conditions is fulfilled and issue a trigger signal and/or alarm signal. Thereby, the system may typically be configured such that the alarm is even triggered when the target is estimated to pass the protected item 50 in close proximity - which would be the case, if the target maintained its course (direction) which it had at position A'. However, as the estimation of the trajectory is only a prediction, which may shortly later turn out to be false due to the target behaving differently than predicted, the prediction unit 37 may typically be configured to account for a security margin. The security margin, which is employed by the prediction unit 37, may be configured to vary depending on the classification (see below) of the target 30. For example, the security margin may be determined to be greater, when the target has large outer dimensions and/or is determined to move at relatively high speed. In Fig. 4, a situation is shown, in which no alarm will be triggered, because the target is passing the protected item 50, e.g. a machine 51, at a distance which is determined by the prediction unit 37 to be safe.

The above uses the intrinsically available velocity or speed information from the FMCW principle and combines it with the position information for the target from the phased array principle, which may in embodiments be combined with information obtained from other sensors, e.g. a visual or optical sensor or sensor array, as is described further below. Further, based on this information, in embodiments also information from a controller of, e.g., an industrial machine 51 may be used. This information may be obtained, e.g., via an interface between the machine 51 and the microwave motion detection system 1. Based on the speed and estimated trajectory of a target 30, it may be predicted by the prediction unit 37 how much time is left until the machine 51 must be stopped or switched off, based on the speed, position and direction of the target and the time, which the machine needs for coming to a halt. Hence, if a target 30 approaches the protected item 50, e.g. machine 51, at relatively high speed, the alarm may be triggered earlier than for a slowly approaching target. This potentially reduces the number of false alarms in the case that a target changes its direction at a late stage, when approaching the protected item 50.

Fig. 5 shows a scenario of using a microwave motion detection device 1 according to embodiments, where the system, or at least its antenna array 21, is placed at a different location than the protected item 50, e.g. machine or installation. As can readily be seen, the system 1 then views the protected item 50 simultaneously with the target 30. In such a setup, the location of the protected item 50 may be stored in the processing unit 35, for example.

In a typical environment where the microwave motion detection system 1 and method 200 according to embodiments may be employed, the microwave signal transmitted from the system 1 will typically be reflected by a number of objects or targets 30 in the area 25 to be monitored, which are for the largest part uncritical in terms of safety of the protected item 50, i.e. installation or machine which shall be protected from interaction with a target 30. In order to be able to discriminate between static objects or targets producing a radar echo, hence a microwave signal, and targets, which need attention of the microwave motion detection system 1, the system 1 is able to recognize, if an object or target in the area is to be classified as belonging to a background. At least two types of background objects may be accounted for.

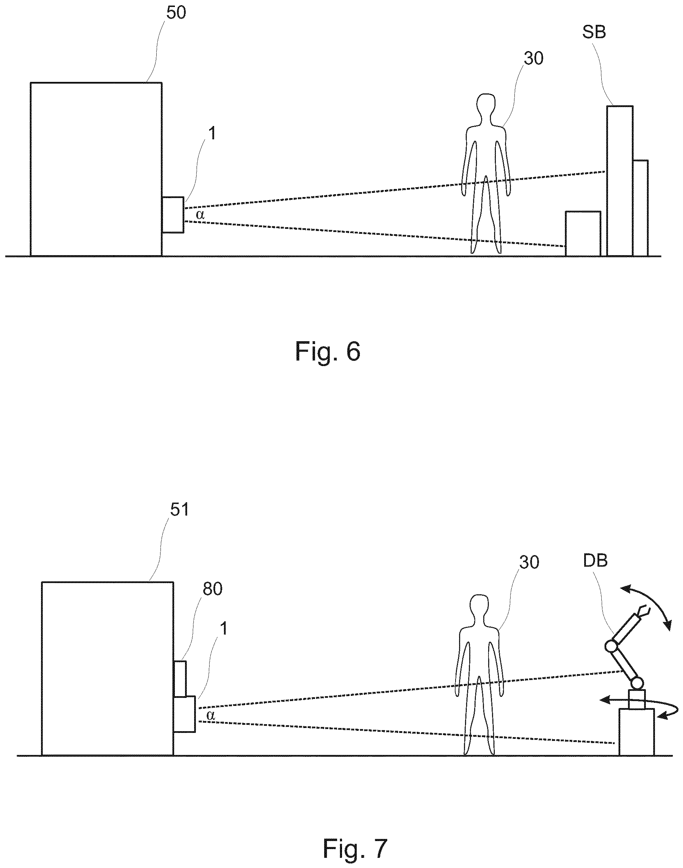

Firstly, objects may belong to a static background SB and may thus contribute to a detected microwave signal resulting from the static background, which is schematically shown in Fig. 6. Such background objects may for example be walls, poles, boxes, closets, shelves, and the like. In order to be able to discriminate, whether a detected target 30 belongs to the static background SB, the microwave motion detection system 1 is configured to determine a static background signal SBS in absence of a target 30. This can, for example, be carried out during a commissioning phase of the microwave motion detection system 1. A representation of the static background signal SBS is then stored in a memory section 36 of the processing unit 35 of the microwave motion detection system 1. The former process can be configured such that it can be initiated by a human operator, e.g. via a control console (not shown), in particular a remote control console, which may have connecting means, in particular for digitally connecting to the (industrial) internet of things (IoT).

Additionally or alternatively to the above, the microwave motion detection system 1 may in embodiments be configured to continuously remove or exclude the static background signal SBS from the information obtained through the processing of the received microwave signal during the monitoring process. That is, continuously or frequently, the static background signal SBS is monitored in a background monitoring block and compared with a representation of the static background signal, which is stored in a memory section 36 of the processing unit 35. Hence, newly appearing targets 30 identified by the processing unit 35 may be identified as newly belonging to the static background signal SBS. One out of several possible conditions for the judgement, if a new target belongs to the background signal, are when the target appears and is then present at a fixed position in the area 25 to be monitored for longer than a predefined time-span. This time span may, for example, be defined as 1 minute, 2 minutes, 5 minutes, or greater. The time span may be configurable by an operator in order to account for specific conditions of the surroundings, in which the microwave motion detection system 1 operates. Further, the processing unit 35 may be configured to adapt the time span automatically by employing a machine learning process (artificial intelligence) while also employing input by an operator, e.g. about false classifications of targets as belonging to the background signal, or about false alarms.

When the processing unit 35 has decided that a newly appearing target 30 belongs to a static background, the stored representation of the static background signal SBS may be adapted to account for the new permanently present object.

In a second variant of handling background objects according to embodiments, targets may be categorized to belong to a dynamic background (DB), such as is shown in Fig. 7. Thereby, the processing unit classifies, in a classifying block, by analyzing the parameters location, speed and past trajectory of a newly appearing target, if the target has a repetitive dynamic behaviour. Such an object may for example be a robot which carries out repetitive movements. The robot may then be classified by the prediction unit 37 as belonging to a dynamic background, and the information on its position and the data on the repetitive movements may be stored as a representation thereof in a database in the memory section 36 of the processing unit 35 as belonging to a dynamic background signal. For such objects, no alarm is triggered by the microwave motion detection system 1.

In order to enhance the precision and long term stability of the microwave motion detection system 1, a calibration can be carried out. This may be on initiative of a human operator, or regularly, or if a self-diagnosis of the microwave motion detection system 1 yields that the precision has decreased. For the diagnosis, a test target with a defined radar cross section and signal response may be placed into the field of view of the microwave motion detection system 1. The response of the microwave motion detection system to the test target is then detected. Depending on the response of the system, a re-calibration may be carried out. The test target may be placed by a human in the area to be monitored. Also, the placement of the test target may be initiated by the microwave motion detection system 1, e.g. by placing the test target by a robot arm. Also, a remote-controlled and self-moving vehicle or (micro-)drone may be employed for this purpose. In embodiments, such re-calibration can be monitored, initiated, and/or controlled via connecting means of the microwave motion detection system to a remote data network, in particular industrial internet of things (IoT).

In embodiments, the microwave motion detection system 1 may discriminate between different types of detected targets 30. It may classify targets according to predefined data models stored in the memory section 36 of the processing unit 35. This is carried out by, e.g., analysing the magnitude and the spatial signature of the reflected signal received by the antennas 20. For example, an automated guided vehicle typically has a larger radar cross section than a human. Distinguishing between various types of targets can, for example, help to reduce false alarms, because a target which is safely attributed to be an automated vehicle can be assumed not to require an alarm. The stored data models may also be manipulated by an operator. For example, a data model for an automated vehicle, which has a built-in security mechanism against collision, might be categorized as generally not causing the triggering of an alarm. Hence, reliability and the occurrence of false alarms may be reduced.

In further embodiments, additional information may be employed in the systems and methods according to embodiments. The additional information may be obtained from a further monitoring device 80, such as a laser-based scanner system, a machine vision system, or an infrared sensor, or from other devices, sensors, information systems, or the like. An embodiment of the further monitoring device 80 is shown schematically in Fig. 7. It may be located at basically the same position at or with respect to the protected item 50, in Fig. 7 being a machine 51, as the antenna array 21 of the microwave motion detection system 1. The additional information from the further monitoring device 80 may be used to enhance reliability of the method 200 and/or for improving the quality and reliability of discrimination between different types of targets. For example, the microwave motion detection system 1 may be combined with a laser scanner. The data from the conventional laser scanner, which operates in parallel with the microwave detection system 1, can be fused with the microwave scanner to increase reliability and precision. Further, if the microwave motion detection system 1 is combined with a vision sensor, the system becomes more capable of classifying and/or recognizing the targets in its vicinity. As a consequence, the ability to perform target-type selective triggering is enhanced. For example, an alarm may be issued, if a human is detected, but not if an automated guided vehicle transits past the protected item.

In embodiments, information about the outer dimensions of the protected item 50, e.g. a machine or installation, may be stored in a memory section 36 of the microwave motion detection system 1, and/or information about the outer dimensions may be accounted for in at least one condition of approaching. The processing unit 35 may be configured to take into account the dimensions, more particularly, the prediction unit 37 may utilize the information to decide, if a target 30 might arrive at the protected item 50, on the basis of the estimated trajectory ET, or if it will pass in a certain distance. If the distance is decided upon to be, e.g., too small according to at least one condition of approaching, an alarm signal or trigger signal may be issued.

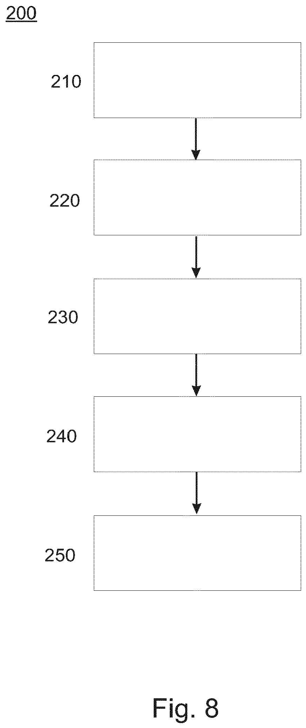

In Fig. 8, a method 200 of monitoring at least one target 30 with a microwave motion detection system 1 is schematically shown. Therein, a block 210 includes transmitting microwave signals into an area 25 to be monitored; a block 220 includes receiving microwave signals reflected by a target; a block 230 includes determining location, speed, and estimated trajectory of the target from the received microwave signals; a block 240 includes determining, if the target belongs to a static background or dynamic background; a block 250 includes setting an alarm condition, if the target is determined not to belong to a static background or dynamic background and if it is determined that the target fulfils at least one condition of approaching to a protected item 50, based on the determined location, speed, and estimated trajectory ET of movement of the target 30.

In further blocks according to embodiments, in a commissioning phase of the microwave detection system, a block 260 includes determining a static background signal in absence of a target; a block 270 includes storing a representation of the static background signal in the microwave detection system; and a block 280 includes continuously excluding the static background signal from the received microwave signal during the monitoring.

In further optional blocks according to embodiments (not shown in Fig. 8), which can be combined with other embodiments described herein, a background monitoring block includes continuously or frequently monitoring a background signal, and a background comparing block includes comparing the background signal with the stored representation of the static background signal; a target identifying block includes identifying targets as newly belonging to the static background signal SBS, when they newly appear and are present at a fixed position in the area to be monitored for longer than a predefined time-span; and an background adaptation block includes adapting the stored representation of the static background signal SBS to account for the new permanently present target.

In a classifying block, it is classified, by analyzing the parameters location, speed and past trajectory PT of a newly appearing target, if the target has a repetitive dynamic behaviour, and a storing block includes storing a representation of its behaviour in a memory section 36 as a dynamic background signal DBS.

In a calibration block a calibration is carried out by placing a test target with defined radar cross section and signal response into the field of view of the microwave motion detection system. A test response determining block includes determining the response of the microwave motion detection system to the test target; a re-calibration block includes re-calibrating the microwave motion detection system 1 depending on the response. The test target may be placed by a human in the area 25 to be monitored, or the placement of the test target may be initiated by the microwave detection system 1, wherein the test target is moved by a robot arm, or is remote controlled, in particular via industrial internet of things (IoT), and self-moving, or is static.

In a target discrimination and classification block, the microwave motion detection system 1 can discriminate between different types of detected targets and classify them according to predefined data models stored in a memory section 36 of the processing unit 35.

According to an aspect, the microwave motion detection system or device 1 (or method) may further comprise a network interface for connecting the system 1 to a data network, in particular a global data network. The data network may be a TCP/IP network such as internet, also called industrial internet of things (IoT). The microwave motion detection system 1 (or method) is operatively connected to the network interface for sending data (monitoring data, etc.) or for carrying out commands received from the data network.

The data communication via network interface may include e.g. reporting data about: monitoring a target 30, in particular its location, speed, and estimated trajectory; information about which targets belong to the static or dynamic background; alarm conditions; calibration conditions; resolution conditions; hazardous conditions; information about outer dimensions of the protected item; providing (and combining with) data from further devices (e.g. further monitoring device 80); etc..

The commands may include e.g. control commands for controlling the microwave motion detection system 1 (or method) to carry out tasks remotely, such as: determining (in particular adapting) the static background; determining (in particular adapting) the dynamic background, calibrating or re-calibrating the microwave motion detection system 1 (or method); discriminating different types of detected targets 30; discriminating different types (in particular different outer dimensions) of protected items; etc..

For such purposes, the microwave motion detection system 1 (or method) further comprises a network interface for connecting the microwave motion detection system 1 (or method) to a data network, wherein the microwave motion detection system 1 (or method) is operatively connected to the network interface for at least one of: sending device status information to the data network, and carrying out a command received from the data network.

The data network may be an Ethernet network using TCP/IP such as local area network (LAN), wide are network (WAN) or Internet, in particular industrial internet of things (IoT). The data network may comprise distributed storage units such as Cloud. Depending on the application, the Cloud can be in form of public, private, hybrid or community Cloud.

While the foregoing is directed to embodiments, other and further embodiments may be devised without departing from the basic scope, and the scope is determined by the claims that follow.

## Claims

1. A method (200) of monitoring at least one target (30) with a microwave motion detection system (1), the method comprising:
transmitting (210) microwave signals into an area (25) to be monitored;
receiving (220) microwave signals reflected by a target (30);
determining (230) location, speed, and estimated trajectory of the target (30) from the received microwave signals;
determining (240), if the target (30) belongs to a static background or dynamic background;
setting (250) an alarm condition, if the target (30) is determined not to belong to a static background or dynamic background and if it is determined that the target fulfils at least one condition of approaching to a protected item (50), based on the determined location, speed, and estimated trajectory (ET) of the target (30).

2. The method of claim 1, further comprising:
in a commissioning phase of the microwave motion detection system (1), determining (260) a static background signal (SBS);
- storing (270) a representation of the static background signal in the microwave motion detection system (1);
- continuously excluding (280) the static background signal from the received microwave signal during the monitoring.

3. The method of claim 1 or 2, further comprising:
- continuously or frequently monitoring (290) a received microwave signal and comparing it (300) with the stored representation of the static background signal (SBS);
- identifying (310) a target (30) as newly belonging to the static background signal (SBS), when it newly appears and is present at a fixed position in the area (25) to be monitored for longer than a predefined time-span;
- adapting (320) the stored representation of the static background signal (SBS) to account for the new permanently present target (30).

4. The method of any of claims 1 to 3, wherein it is classified (330), by analyzing the parameters location, speed and past trajectory (PT) of a newly appearing target (30), if the target (30) has a repetitive dynamic behavior, and storing (340) a representation of its behavior in a memory section (36) as a dynamic background signal (DBS).

5. The method of any preceding claim, further comprising:
- for a calibration, placing (350) a test target with defined radar cross section and signal response into the area (25) to be monitored, in particular wherein placing (350) the test target is controlled by the microwave motion detection system (1) or remotely via a data network or internet of things (IoT);
- determining (360) the response of the microwave motion detection system (1) to the test target; and
- re-calibrating (370) the microwave motion detection system (1) depending on the response.

6. The method of claim 5, wherein the test target is:
- placed by a human in the area (25) to be monitored, or
- the placement of the test target is initiated by the microwave motion detection system (1), wherein the test target is moved by a robot arm, or is remote controlled, in particular via a data network or industrial internet of things (IoT), and is self-moving, or is static.

7. The method of any preceding claim, wherein the microwave motion detection system (1) is configured to discriminate (380) between different types of detected targets (30) and to classify them, in particular according to predefined data models.

8. The method of any preceding claim, further comprising employing additional information from a further monitoring device (80), being a laser-based scanner system, a machine vision system, or an infrared sensor, and wherein the additional information is used to enhance reliability of the method and/or for discriminating between different types of targets (30).

9. The method of any preceding claim, wherein the microwave motion detection system (1) comprises a network interface for connecting it to a data network, such that the microwave motion detection system (1) is operatively connected to the network interface for at least one of: sending device status information to the data network and carrying out a command received from the data network, in particular the data network being at least one of: LAN, WAN or internet (IoT).

10. The method of any preceding claim, wherein the protected item (50) includes:
- a device which is potentially dangerous to humans, in particular a machine (51) processing hazardous materials, a machine (51) having openly moving parts, or an installation carrying dangerous voltages and/or currents,
- a device carrying out a process vulnerable to unplanned interaction by or with a human,
- in particular wherein the microwave motion detection system (1) has a range resolution of 5 cm or better, in particular 2 cm or better.

11. A microwave motion detection system (1), comprising:
a transmitter (10) and at least one antenna (15) for transmitting a microwave signal into an area (25) to be monitored;
at least two antennas (20) for receiving the microwave signals reflected by a target (30); and
a processing unit (35);
wherein the system (1) is configured for:
determining (230) location and speed, and estimating the trajectory (ET) of the target (30) from received microwave signals;
determining (240), if the target (30) belongs to a static background or a dynamic background;
setting an alarm condition, if the target (30) is determined not to belong to a static background or dynamic background and if it is determined that the target (30) fulfils at least one condition of approaching to a protected item (50), based on the determined location, speed, and estimated trajectory (ET) of movement of the target (30).

12. The microwave motion detection system (1) of claim 11, wherein the microwave motion detection system (1) employs the Frequency-Modulated Continuous Wave (FMCW) radar principle and the phased antenna array principle.

13. The microwave motion detection system (1) of any of claims 11 to 12, wherein the microwave motion detection system (1) covers a range of azimuth angles, which is at least 5 times larger, more preferably at least 10 times larger, than a range of elevation angles.

14. The microwave motion detection system (1) of any of claims 11 to 13, further comprising a further monitoring device (80) being a laser-based scanner system, a machine vision system, or an infrared sensor, wherein the microwave motion detection system (1) is configured to employ information gathered from the further monitoring device (80) in the monitoring process.

15. The microwave motion detection system (1) of any of claims 11 to 14, further including information about the outer dimensions of the protected item (50), and wherein the outer dimensions are included in the at least one condition of approaching.

16. The microwave motion detection system (1) of any of claims 11 to 15, further comprising a network interface for connecting it to a data network, such that the microwave motion detection system (1) is operatively connected to the network interface for at least one of: sending device status information to the data network and carrying out a command received from the data network, in particular the data network being at least one of: LAN, WAN or internet (IoT).
